# EUROPEAN PATENT SPECIFICATION

(11) **EP 3 643 760 B1**
(45) Date of publication and mention of the grant of the patent: **30.10.2024**
(21) Application number: 18819734.7
(22) Date of filing: 19.06.2018
(51) Int. Cl.: C09D 183/07, B32B 27/00, C09D 7/60, C09D 183/05, C09J 7/40, C09J 183/04

(54) **RELEASANT COMPOSITION FOR PRESSURE-SENSITIVE SILICONE ADHESIVE AND RELEASE FILM**
TRENNMITTELZUSAMMENSETZUNG FÜR DRUCKEMPFINDLICHEN SILIKONKLEBER UND TRENNFOLIE
COMPOSITION D'AGENT DE SÉPARATION POUR ADHÉSIF À LA SILICONE, ET FILM DE SÉPARATION

(30) Priority: 23.06.2017 JP 2017123726
(43) Date of publication of application: 29.04.2020
(73) Proprietor: Dow Toray Co., Ltd., Shinagawa-ku Tokyo 1408617 (JP)
(72) Inventor: OKAWA, Tadashi, Ichihara-shi, Chiba 299-0108 (JP); SUTO, Michitaka, Ichihara-shi, Chiba 299-0108 (JP); ONODERA, Satoshi, Ichihara-shi, Chiba 299-0108 (JP); NISHIJIMA, Kazuhiro, Ichihara-shi, Chiba 299-0108 (JP); TANAKA, Hidefumi, Ichihara-shi, Chiba 299-0108 (JP); FURUKAWA, Haruhiko, Ichihara-shi, Chiba 299-0108 (JP)
(74) Representative: Murgitroyd & Company
(86) International application number: PCT/JP2018/023211
(87) International publication number: WO 2018/235796

(56) References cited:
- WO-A1-2011/059462
- JP-A- 2016 183 291
- JP-A- H02 245 031

## Description

### TECHNICAL FIELD

The present invention relates to a release agent composition for a silicone pressure-sensitive adhesive, and a release film treated therewith.

### BACKGROUND ART

Silicone pressure-sensitive adhesives are used as various pressure-sensitive adhesives due to their excellent heat resistance, cold resistance, weather resistance, chemical resistance, electrical insulation, and the like. Since silicone pressure-sensitive adhesives strongly adhere to a surface coated with silicone rubber or a silicone-based material, various release agent compositions for silicone pressure-sensitive adhesives have been proposed to form a release film enabling the release of the such adhesives.

For example, Patent Document 1 proposes a curable coating composition comprising: an organopolysiloxane having at least 300 silicon atoms, from 0.5 to 2 mol% of vinyl group-containing siloxane units, and 30 mol% of fluoroalkyl group-containing siloxane units; an organohydrogenpolysiloxane having on an average at least two silicon atom-bonded hydrogen atoms in a molecule and having compatibility with the organopolysiloxane; a hydrosilylation reaction catalyst; and a hydrosilylation reaction inhibitor. In addition, Patent Document 2 proposes a release agent composition for a silicone pressure-sensitive adhesive comprising: an organopolysiloxane having an alkenyl group-containing organic group and a fluoroalkyl group; an organohydrogenpolysiloxane having at least three silicon atom-bonded hydrogen atoms in a molecule; a hydrosilylation reaction catalyst; an organic solvent; and an organopolysiloxane having an alkenyl group but not having a fluoroalkyl group. Patent Document 3 (WO2011059462 A1) discloses release compositions comprising a blend of ethylenically unsaturated fluoroorganopolysiloxane polymers and ethylenically unsaturated non-fluorinated organopolysiloxane polymers. The release compositions are dispersed in a solvent system and also contain a catalyst and at least one crosslinker. Both fluoroorganohydrogenpolysiloxane and organohydrogenpolysiloxane are described. Release liners and adhesive articles including cured release compositions are also disclosed.

However, even with these compositions, there is a problem in forming a release film that can be peeled with a low peeling force from a silicone pressure-sensitive adhesive. In particular, there is a problem in forming a release film that can be peeled with sufficiently low peeling force from a silicone pressure-sensitive adhesive that does not have a support substrate as used in recent years.

### Prior Art Documents

### Patent Documents

Patent Document 1: Japanese Unexamined Patent Application Publication No. H02-245031
Patent Document 2: Japanese Unexamined Patent Application Publication No. 2016-183291
Patent Document 3: WO2011059462 A1

### SUMMARY OF THE INVENTION

### Problems to be Solved by the Invention

An object of the present invention is to provide a release agent composition for a silicone pressure-sensitive adhesive capable of forming a release film having a small peeling force with respect to a silicone pressure-sensitive adhesive, and to further provide a release film having a small peeling force with respect to a silicone pressure-sensitive adhesive.

### Means for Solving the Problems

The release agent composition for a silicone pressure-sensitive adhesive of the present invention comprises:
(A) an organopolysiloxane represented by the average unit formula:

   (R¹₃SiO_{1/2})ₐ(R¹₂SiO_{2/2})_{b}(R¹SiO_{3/2})_{c}(SiO_{4/2})_{d}

   wherein R¹ are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms; at least two R¹ are the alkenyl groups in a molecule; a content of the alkenyl groups in terms of vinyl groups is at most 0.1 mass%; a content of fluorine atoms associated with the fluoroalkyl groups is at least 36 mass%; "a" is a positive number; "b" is a positive number; "c" is 0 or a positive number; and "d" is 0 or a positive number;
(B) an organopolysiloxane having at least two silicon atom-bonded hydrogen atoms in a molecule, in an amount such that a molar ratio of the silicon-bonded hydrogen atoms in this component to the alkenyl groups in component (A) is from 0.1 to 20; and
(C) an effective amount of a hydrosilylation reaction catalyst.

The fluoroalkyl group in component (A) is preferably a 3,3,3-trifluoropropyl group, a 3,3,4,4,4-pentafluorobutyl group, a 3,3,4,4,5,5,5-heptafluoropentyl group, a 3,3,4,4,5,5,6,6,6-nonafluorohexyl group, a 3,3,4,4,5,5,6,6,7,7,7-undecafluoroheptyl group, a 3,3,4,4,5,5,6,6,7,7,8,8,8-tridecafluorooctyl group, or a 3,3,4,4,5,5,6,6,7,7,8,8,9,9,9-pentadecafluorononyl group.

In addition, component (B) is preferably an organopolysiloxane having a fluoroalkyl group with from 1 to 12 carbon atoms.

The present composition preferably comprises: (D) a hydrosilylation reaction inhibitor in an amount of from 0.01 to 5 parts by mass with respect to 100 parts by mass of component (A).

In addition, the present composition preferably comprises: (E) an arbitrary amount of a solvent.

The release film of the present invention is obtained by treating a substrate with the release agent composition for a silicone pressure-sensitive adhesive described above, and the substrate is preferably a plastic film.

### Effects of the Invention

With the release agent composition for a silicone pressure-sensitive adhesive of the present invention, it is possible to form a release film with which a silicone pressure-sensitive adhesive can be peeled with a low peeling force. In addition, the release film of the present invention allows a silicone pressure-sensitive adhesive to be peeled with a low peeling force.

### Mode for Carrying Out the Invention

First, the release agent composition for a silicone pressure-sensitive adhesive of the present invention will be described in detail.

### [Component (A)]

Component (A) is an organopolysiloxane represented by the average unit formula:

(R¹₃SiO_{1/2})ₐ(R¹₂SiO_{2/2})_{b}(R¹SiO_{3/2})_{c}(SiO_{4/2})_{d}

In the formula, R¹ are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms.

Examples of the alkyl groups of R¹ include methyl groups, ethyl groups, propyl groups, butyl groups, pentyl groups, hexyl groups, heptyl groups, octyl groups, nonyl groups, decyl groups, undecyl groups, and dodecyl groups, and methyl groups are preferable.

In addition, examples of the alkenyl groups of R¹ include vinyl groups, allyl groups, butenyl groups, pentenyl groups, hexenyl groups, heptenyl groups, octenyl groups, nonenyl groups, decenyl groups, undecenyl groups, and dodecenyl groups, and vinyl groups and hexenyl groups are preferable. Note that at least two R¹ are the alkenyl groups in a molecule, and the content of the alkenyl groups in terms of vinyl groups is at most 0.1 mass% and is preferably at most 0.09 mass%, at most 0.08 mass%, or at most 0.07 mass%. This is because when the content of the alkenyl groups in component (A) is less than or equal to the upper limit described above, the adhesion of the present composition to a substrate can be enhanced. Note that the content in terms of vinyl groups refers to the content calculated by replacing the alkenyl groups other than vinyl groups with the mass of an equimolar amount of vinyl groups.

In addition, examples of the aryl groups of R¹ include phenyl groups, tolyl groups, and xylyl groups, and phenyl groups are preferable.

Moreover, examples of the aralkyl groups of R¹ include benzyl groups and phenethyl groups, and benzyl groups and phenethyl groups are preferable.

Further, examples of the fluoroalkyl groups of R¹ include 3,3,3-trifluoropropyl groups, 3,3,4,4,4-pentafluorobutyl groups, 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, 3,3,4,4,5,5,6,6,7,7,8,8,8-tridecafluorooctyl groups, and 3,3,4,4,5,5,6,6,7,7,8,8,9,9,9-pentadecafluorononyl groups, and 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, or 3,3,4,4,5,5,6,6,7,7,8,8,8-tridecafluorooctyl groups are preferable. Note that the content of fluorine atoms associated with the fluoroalkyl groups in a molecule is at least 36 mass% and preferably at least 37 mass%, at least 38 mass%, or at least 40 mass%. This is because when the content of fluorine atoms in component (A) is greater than or equal to the lower limit described above, a releasable film obtained by crosslinking the present composition exhibits a good peeling force with respect to a silicone pressure-sensitive adhesive. Note that the upper limit of the content of fluorine atoms in component (A) is not particularly limited, however, when the content is too high, component (A) itself tends to not dissolve in the solvent, which diminishes the handleability, and the content therefore is preferably at most 60 mass% or at most 50 mass%.

Note that a small amount of hydroxyl groups or alkoxy groups may be bonded to the silicon atoms in component (A) within a range that does not diminish the object of the present invention.

In addition, in the formula, "a" is a positive number, "b" is a positive number, "c" is 0 or a positive number, and "d" is 0 or a positive number. Note that when "a" is 2, the total of "a" to "d" is preferably a number within a range of from 300 to 4,000, and is more preferably within a given range with a lower limit of 400, 500, 600, 700, 800, 1,000, 1,500, or 2,000 and an upper limit of 3,500 or 3,000. This is because when "a" is 2 and the total of "a" to "d" is greater than or equal to the lower limit of the range described above, the crosslinking of the present composition progresses sufficiently, while when the total is less than or equal to the upper limit of the range described above, the handleability of the present composition is favorable.

Examples of such component (A) include the following organopolysiloxanes. Note that in the formulas, Me, Vi, Hex, Pf, and Pf' are respectively a methyl group, a vinyl group, an n-hexenyl group, a 3,3,4,4,5,5,6,6,6-nonafluorohexyl group, and a 3,3,4,4,5,5,6,6,7,7,8,8,8-tridecafluorooctyl group. Organopolysiloxane represented by the average unit formula:

(Me₂ViSiO_{1/2})₂(Me₂SiO_{2/2})₁₂₀₀(MePfSiO_{2/2})₁₂₀₀(MeViSiO_{2/2})₈

(vinyl group content: 0.06 mass%; fluorine atom content: 44.9 mass%)
Organopolysiloxane represented by the average unit formula:

   (Me₂ViSiO_{1/2})₂(Me₂SiO_{2/2})₁₅₀₀(MePfSiO_{2/2})₁₂₀₀(MeViSiO_{2/2})₅
(vinyl group content: 0.04 mass%; fluorine atom content: 42.8 mass%)
Organopolysiloxane represented by the average unit formula:

   (Me₃SiO_{1/2})₂(Me₂SiO_{2/2})₁₅₀₀(MePfSiO_{2/2})₁₂₀₀(MeViSiO_{2/2})₁₂
(vinyl group content: 0.07 mass%; fluorine atom content: 42.8 mass%)
Organopolysiloxane represented by the average unit formula:

   (Me₂ViSiO_{1/2})₂(Me₂SiO_{2/2})₂₅₀(MePfSiO_{2/2})₂₀₀
(vinyl group content: 0.07 mass%; fluorine atom content: 42.8 mass%)
Organopolysiloxane represented by the average unit formula:

   (Me₂ViSiO_{1/2})₂(Me₂SiO_{2/2})₁₀₀₀(MePfSiO_{2/2})₁₅₀₀
(vinyl group content: 0.06 mass%; fluorine atom content: 48.0 mass%)
Organopolysiloxane represented by the average unit formula:

   (Me₃SiO_{1/2})₂(Me₂SiO_{2/2})₁₅₀₀(MePfSiO_{2/2})₁₂₀₀(MeHexSiO_{2/2})₁₀
(vinyl group content: 0.06 mass%; fluorine atom content: 42.7 mass%)
Organopolysiloxane represented by the average unit formula:

   (Me₃SiO_{1/2})₂(Me₂SiO_{2/2})₁₅₀₀(MePfSiO_{2/2})₁₂₀₀(MeViSiO_{2/2})₁₄(MeSiO_{3/2})₈
(vinyl group content: 0.08 mass%; fluorine atom content: 42.7 mass%)
Organopolysiloxane represented by the average unit formula:

   (Me₂ViSiO_{1/2})₄(Me₂SiO_{2/2})₁₄₀₀(MePf'SiO_{2/2})₁₁₀₀(MeViSiO_{2/2})₈(SiO_{4/2})₁
(vinyl group content: 0.06 mass%; fluorine atom content: 49.2 mass%)
Organopolysiloxane represented by the average unit formula:

   (Me₂ViSiO_{1/2})₄(Me₂SiO_{2/2})₁₄₀₀(MePfSiO_{2/2})₁₁₀₀(MeViSiO_{2/2})₈(SiO_{4/2})₁
(vinyl group content: 0.07 mass%; fluorine atom content: 42.6 mass%)
Organopolysiloxane represented by the average unit formula:

   (Me₂ViSiO_{1/2})₄(Me₂SiO_{2/2})₅₀₀(MePfSiO_{2/2})₅₀₀(SiO_{4/2})₁
(vinyl group content: 0.06 mass%; fluorine atom content: 44.9 mass%)
Organopolysiloxane represented by the average unit formula:

   (Me₂HexSiO_{1/2})₄(Me₂SiO_{2/2})₅₀₀(MePfSiO_{2/2})₅₀₀(SiO_{4/2})₁
(vinyl group content: 0.06 mass%; fluorine atom content: 44.8 mass%)

### [Component (B)]

Component (B) is an organopolysiloxane having at least two silicon atom-bonded hydrogen atoms in a molecule. Examples of groups bonded to silicon atoms in component (B) include alkyl groups having from 1 to 12 carbon atoms, aryl groups having from 6 to 12 carbon atoms, aralkyl groups having from 7 to 12 carbon atoms, and fluoroalkyl groups having from 1 to 12 carbon atoms, examples of which are the same as those described above. Note that a small amount of hydroxyl groups or alkoxy groups may be bonded to the silicon atoms in component (B) within a range that does not diminish the object of the present invention.

A molecular structure of component (B) is not limited. Examples thereof include a straight-chain structure, a branched-chain structure, a partially branched straight-chain structure, a resinous structure, and a cyclic structure, and a straight-chain structure or a partially branched straight-chain structure is preferable.

An example of such component (B) is an organopolysiloxane represented by the average unit formula:

(R²₃SiO_{1/2})ₑ(R²₂SiO_{2/2})_{f}(R²SiO_{3/2})_{g}(SiO_{4/2})ₕ

In the formula, R² are the same or different, and are hydrogen atoms, alkyl groups having from 1 to 12 carbon atoms, aryl groups having from 6 to 12 carbon atoms, aralkyl groups having from 7 to 12 carbon atoms, or fluoroalkyl groups having from 1 to 12 carbon atoms.

Examples of the alkyl groups of R² include methyl groups, ethyl groups, propyl groups, butyl groups, pentyl groups, hexyl groups, heptyl groups, octyl groups, nonyl groups, decyl groups, undecyl groups, and dodecyl groups, and methyl groups are preferable.

In addition, examples of the aryl groups of R² include phenyl groups, tolyl groups, and xylyl groups, and phenyl groups are preferable.

Moreover, examples of the aralkyl groups of R² include benzyl groups and phenethyl groups, and benzyl groups and phenethyl groups are preferable.

Further, examples of the fluoroalkyl groups of R² include 3,3,3-trifluoropropyl groups, 3,3,4,4,4-pentafluorobutyl groups, 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, 3,3,4,4,5,5,6,6,7,7,8,8,8-tridecafluorooctyl groups, and 3,3,4,4,5,5,6,6,7,7,8,8,9,9,9-pentadecafluorononyl groups, and 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, or 3,3,4,4,5,5,6,6,7,7,8,8,8-tridecafluorooctyl groups are preferable. Note that the content of fluorine atoms associated with the fluoroalkyl groups in a molecule is not particularly limited but is preferably at least 20 mass%, at least 25 mass%, at least 30 mass%, or at least 35 mass%. This is because when the content of fluorine atoms in component (B) is greater than or equal to the lower limit described above, the compatibility with component (A) is enhanced, and a releasable film obtained by crosslinking the present composition exhibits a good peeling force with respect to a silicone pressure-sensitive adhesive. Note that the upper limit of the content of fluorine atoms in component (B) is not particularly limited, however, when the content is too high, component (B) itself tends to not dissolve in the solvent, which diminishes the handleability, so the content is preferably at most 60 mass% or at most 50 mass%.

In addition, in the formula, "e" is a positive number, "f" is a positive number, "g" is 0 or a positive number, and "h" is 0 or a positive number. However, when "e" is 2, the total of "e" to "h" is preferably within a range of from 5 to 100, and is within a given range with a lower limit of 10 or 15 and an upper limit of 80, 70, 60, 50, or 40. This is because when "e" is 2 and the total of "e" to "h" is greater than or equal to the lower limit of the range described above, the crosslinking of the present composition progresses sufficiently, while when the total is less than or equal to the upper limit of the range described above, the handleability of the present composition is favorable.

A content of component (B) is an amount such that a molar ratio of the silicon atom-bonded hydrogen atoms in this component to the alkenyl groups in component (A) is within a range of from 0.1 to 20, and is preferably within a given range with a lower limit of 0.5, 0.8, or 1 and an upper limit of 18, 17, 16, 15, 14, 13, or 12. This is because when the content of component (B) is greater than or equal to the lower limit of the range described above, the crosslinking of the present composition progresses sufficiently, while when the content is less than or equal to the upper limit of the range described above, the characteristics of the resulting releasable film are stabilized.

### [Component (C)]

Component (C) is a hydrosilylation reaction catalyst for promoting the curing of the present composition. Examples thereof include platinum-based catalysts, rhodium-based catalysts, and palladium-based catalysts, and platinum-based catalysts are preferable. Examples of the platinum based catalyst include platinum fine powder, platinum black, platinum supporting silica fine powder, platinum supporting activated carbon, chloroplatinic acid, alcohol solutions of chloroplatinic acid, olefin complexes of platinum, and alkenylsiloxane complexes of platinum.

A content of component (C) is an amount that promotes the curing of the present composition and is specifically an amount in which the platinum atoms in the catalyst are within a range of from 0.1 to 1,000 ppm in mass units with respect to the present composition. This is because when the content of component (C) is greater than or equal to the lower limit of the range described above, the curing of the resulting composition progresses, while when the content is less than or equal to the upper limit of the range described above, the resulting cured product becomes less susceptible to discoloration.

### [Component (D)]

The present composition may also comprise (D) a hydrosilylation reaction inhibitor in order to control the crosslinking reactions thereof. Examples of component (D) include: alkyne alcohols such as 1-ethynylcyclohexan-1-ol, 2-methyl-3-butyn-2-ol, 3,5-dimethyl-1-hexyn-3-ol, and 2-phenyl-3-butyn-2-ol; enyne compounds such as 3-methyl-3-penten-1-yne and 3,5-dimethyl-3-hexen-1-yne; methyl alkenyl siloxane oligomers such as 1,3,5,7-tetramethyl-1,3,5,7-tetravinylcyclotetrasiloxane and 1,3,5,7-tetramethyl-1,3,5,7-tetrahexenylcyclotetrasiloxane; alkynoxysilanes such as dimethyl bis(3-methyl-1-butyn-3-oxy)silane and methylvinyl bis(3-methyl-1-butyn-3-oxy)silane; alkyneoxysilane compounds such as methyl tris(1-methyl-1-phenyl-propyneoxy)silane, dimethyl bis(1-methyl-1-phenyl-propyneoxy)silane, methyl tris(1,1-dimethyl-propyneoxy)silane, dimethyl bis(1,1-dimethyl-propyneoxy)silane; and benzotriazoles.

A content of component (D) is not limited, and from the perspective of imparting sufficient pot-life to the present composition, the content is preferably within a range of from 0.01 to 5 parts by mass, within a range of from 0.05 to 5 parts by mass, or within a range of from 0.05 to 3 parts by mass with respect to 100 parts by mass of component (A).

### [Component (E)]

In addition, the present composition may comprise (E) a solvent in order to reduce the viscosity thereof and to improve the application workability or wettability. Examples of component (E) include: hydrocarbon-based solvents such as aromatic hydrocarbon-based solvents such as toluene and xylene, aliphatic hydrocarbon-based solvents such as hexane, heptane, octane, isooctane, decane, cyclohexane, methylcyclohexane, and isoparaffin, industrial gasoline (rubber solvents or the like), petroleum benzene, and solvent naphtha; ketone-based solvents such as acetone, methyl ethyl ketone, 2-pentanone, 3-pentanone, 2-hexanone, 2-heptanone, 4-heptanone, methyl isobutyl ketone, diisobutyl ketone, acetonyl acetone, and cyclohexanone; ester-based solvents such as ethyl acetate, propyl acetate, isopropyl acetate, butyl acetate, and isobutyl acetate; ether-based solvents such as diethyl ether, dipropyl ether, diisopropyl ether, dibutyl ether, 1,2-dimethoxyethane, and 1,4-dioxane; solvents having ester and ether components such as 2-methoxyethylacetate, 2-ethoxyethylacetate, propylene glycol monoether acetate, and 2-butoxyethylacetate; siloxane-based solvents such as hexamethyl disiloxane, octamethyl trisiloxane, octamethyl cyclotetrasiloxane, decamethyl cyclopentasiloxane, tris(trimethylsiloxy)methylsilane, and tetrakis(trimethylsiloxy)silane; fluorine-based solvents such as trifluorotoluene, hexafluoroxylene, methyl nonafluorobutyl ether, and ethyl nonafluorobutyl ether; and mixed solvents of two or more types thereof.

A content of component (E) is arbitrary and may be adjusted appropriately as necessary, but the content is typically not greater than 2,000 parts by mass and within a range of from 20 to 1,800 parts by mass per 100 parts by mass of component (A).

The present composition may comprise a photopolymerization initiator, an antioxidant, a reactive diluent, a leveling agent, a filler, an antistatic agent, an antifoaming agent, a pigment, or the like within a range that does not impair the object of the present invention.

A release film can be produced by applying the present composition to a substrate and curing the composition.

A paper or plastic film, glass, or metal is selected as the substrate. Examples of paper include high-quality paper, coated paper, art paper, glassine paper, polyethylene laminate paper, and craft paper. Examples of plastic films include polyethylene films, polypropylene films, polyester films, polyimide films, polyvinyl chloride films, polyvinylidene chloride films, polyvinyl alcohol films, polycarbonate films, polytetrafluoroethylene films, polystyrene films, ethylene-vinyl acetate copolymer films, ethylene-vinyl alcohol copolymer films, triacetyl cellulose films, polyether ether ketone films, and polyphenylene sulfide films. The glass is not particularly limited in terms of thickness, type, or the like, and may be subjected to chemical reinforcement treatment or the like. In addition, glass fibers may also be applied, and glass fibers may be used alone or in combination with another resin. Examples of metals include aluminum foil, copper foil, gold foil, silver foil, and nickel foil. When used as a release film, a polyester film is preferable.

A method of applying the present composition to a substrate is not limited, and a known coating method may be used. Examples of the coating method include a wire bar, a comma coater, a lip cpater, a roll coater, a die coater, a knife coater, a blade coater, a rod coater, a kiss coater, a gravure coater, screen coating, immersion coating, and cast coating.

An amount of the present composition applied to the substrate is also not limited and is preferably within a range of from 0.1 to 2 g/m² or within a range of from 0.2 to 1.8 g/m² in terms of solid content. Curing conditions are also not limited, however, the composition is preferably heated for 10 to 180 seconds or 15 to 150 seconds within a range of from 80 to 180°C or within a range of from 90 to 160°C.

A silicone pressure-sensitive adhesive may be applied to the releasable film produced in this way. A commercially available composition may be used as the silicone pressure-sensitive adhesive composition. As such a silicone pressure-sensitive adhesive, SD 4580 PSA, SD 4584 PSA, and SD 4585 manufactured by Dow Corning Toray Co., Ltd. are available.

A method of applying the silicone pressure-sensitive adhesive composition may be a known coating method, examples of which include a comma coater, a lip coater, a roll coater, a die coater, a knife coater, a blade coater, a rod coater, a kiss coater, a gravure coater, screen coating, immersion coating, and cast coating.

An amount of the silicone pressure-sensitive adhesive that is applied may be an amount such that a thickness after curing is from 0.1 to 300 µm and is preferably an amount such that a thickness after curing is from 0.5 to 200 µm. In addition, in a measurement of the peeling force described above, curing conditions of the silicone pressure-sensitive adhesive composition may be from 10 seconds to 10 minutes at 80 to 150°C.

### Examples

The release agent composition for a silicone pressure-sensitive adhesive and the release film of the present invention will be described in further detail hereinafter using examples. Note that in the formulas, Me, Vi, Pf, and Pf' are respectively a methyl group, a vinyl group, a 3,3,4,4,5,5,6,6,6-nonafluorohexyl group, and a 3,3,4,4,5,5,6,6,7,7,8,8,8-tridecafluorooctyl group. In addition, the methods of measuring the peeling force and residual adhesion rate of the silicone pressure-sensitive adhesive are as follows.

### <Measurement of peeling force and residual adhesive strength (1)>

First, a silicone pressure-sensitive adhesive (prepared by mixing 100.0 parts by mass of an addition curing type pressure-sensitive adhesive SD 4580 PSA manufactured by Dow Corning Toray Co., Ltd., 0.9 parts by mass of NC-25 CATALYST manufactured by the same company, and 50.0 parts by mass of toluene) was applied to a release film using an applicator so that the film thickness after curing was 50 µm, and this was cured by heating for 6 minutes at 160°C. A50 µm polyethylene terephthalate (PET) film was then attached using a 2 kg roller, and this was aged for 24 hours or longer in an oven at 70°C. The film that was removed from the oven was then cut to a width of 1 inch, and the peeling force at 25°C was measured by pulling the release film at a rate of 1.0 m/min. in the 180° direction with a tensilon.

After the measurement described above, the silicone pressure-sensitive adhesive was attached to a polymethylmethacrylate resin using a 2 kg roller and left to stand for at least 30 minutes. The residual adhesive strength of the silicone pressure-sensitive adhesive at 25°C was then measured by pulling the silicone pressure-sensitive adhesive at a rate of 0.3 m/min in the 180° direction with a tensilon.

### <Measurement of peeling force and residual adhesive strength (2)>

First, a silicone pressure-sensitive adhesive (prepared by mixing 100.0 parts by mass of an addition curing type pressure-sensitive adhesive SD 4580 PSA manufactured by Dow Corning Toray Co., Ltd., 0.9 parts by mass of NC-25 CATALYST manufactured by the same company, and 50.0 parts by mass of toluene) was applied to a 50 µm polyethylene terephthalate (PET) film using an applicator so that the film thickness after curing was 50 µm, and this was cured by heating for 6 minutes at 160°C. A release film was then attached using a 2 kg roller, and this was aged for 24 hours or longer in an oven at 70°C. The film that was removed from the oven was then cut to a width of 1 inch, and the peeling force at 25°C was measured by pulling the release film at a rate of 1.0 m/min. in the 180° direction with a tensilon.

After the measurement described above, the silicone pressure-sensitive adhesive was attached to a polymethylmethacrylate resin using a 2 kg roller and left to stand for at least 30 minutes. The residual adhesive strength of the silicone pressure-sensitive adhesive at 25°C was then measured by pulling the silicone pressure-sensitive adhesive at a rate of 0.3 m/min. in the 180° direction with a tensilon.

### <Measurement of peeling force and residual adhesive strength (3)>

First, a silicone pressure-sensitive adhesive (prepared by mixing 100.0 parts by mass of a peroxide curing type pressure-sensitive adhesive SH 4280 PSA manufactured by Dow Corning Toray Co., Ltd., 1.6 parts by mass of Niper BMT-K40 manufactured by Nippon Oil and Fats Co., Ltd., and 50.0 parts by mass of toluene) was applied to a release film using an applicator so that the film thickness after curing was 50 µm, and after this was dried for 3 minutes at 70°C, it was cured by heating for 3 minutes at 150°C. A 50 µm polyethylene terephthalate (PET) film was then attached using a 2 kg roller, and this was aged for 24 hours or longer in an oven at 70°C. The film that was removed from the oven was then cut to a width of 1 inch, and the peeling force at 25°C was measured by pulling the release film at a rate of 1.0 m/min. in the 180° direction with a tensilon.

After the measurement described above, the silicone pressure-sensitive adhesive was attached to a polymethylmethacrylate resin using a 2 kg roller and left to stand for at least 30 minutes. The residual adhesive strength of the silicone pressure-sensitive adhesive at 25°C was then measured by pulling the silicone pressure-sensitive adhesive at a rate of 0.3 m/min. in the 180° direction with a tensilon.

### <Measurement of peeling force and residual adhesive strength (4)>

First, a silicone pressure-sensitive adhesive (prepared by mixing 100.4 parts by mass of a peroxide curing type pressure-sensitive adhesive SH 4280 PSA manufactured by Dow Corning Toray Co., Ltd., 1.6 parts by mass of Niper BMT-K40 manufactured by Nippon Oil and Fats Co., Ltd., and 50.5 parts by mass of toluene) was applied to a 50 µm polyethylene terephthalate (PET) film using an applicator so that the film thickness after curing was 50 µm, and after this was dried for 3 minutes at 70°C, it was cured by heating for 3 minutes at 150°C. A release film was then attached using a 2 kg roller, and this was aged for 24 hours or longer in an oven at 70°C. The film that was removed from the oven was then cut to a width of 1 inch, and the peeling force at 25°C was measured by pulling the release film at a rate of 1.0 m/min. in the 180° direction with a tensilon.

After the measurement described above, the silicone pressure-sensitive adhesive was attached to a polymethylmethacrylate resin using a 2 kg roller and left to stand for at least 30 minutes. The residual adhesive strength of the silicone pressure-sensitive adhesive at 25°C was then measured by pulling the silicone pressure-sensitive adhesive at a rate of 0.3 m/min. in the 180° direction with a tensilon.

### [Practical Example 1]

A release agent composition for a silicone pressure-sensitive adhesive was prepared by uniformly mixing 3.37 parts by mass of an organopolysiloxane represented by the average unit formula:

(Me₃SiO_{1/2})₂(Me₂SiO_{2/2})₁₄₅₂(MePfSiO_{2/2})₁₀₉₀(MeViSiO_{2/2})₈

and having a vinyl group content of 0.05 mass% and a fluorine atom content of 42.2 mass%; 0.14 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 11.1 mol with respect to 1 mol of the vinyl groups in the organopolysiloxane described above); 0.17 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.16 parts by mass of a diisopropyl ether solution of 10 mass% methyl butynol; and 96.16 parts by mass of diisopropyl ether.

The release agent composition for a silicone pressure-sensitive adhesive described above was applied to a 50 µm polyethylene terephthalate (PET) film using a Meyer bar #3, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 0.2 µm. The peeling force and residual adhesive strength were measured in accordance with the measurements (1) to (4) described above using this release film, and the results are shown in Table 1.

### [Practical Example 2]

A release agent composition for a silicone pressure-sensitive adhesive was prepared by uniformly mixing 3.39 parts by mass of an organopolysiloxane represented by the average unit formula:

(Me₂ViSiO_{1/2})₂(Me₂SiO_{2/2})₁₄₆₇(MePfSiO_{2/2})₁₁₀₀(MeViSiO_{2/2})₅

and having a vinyl group content of 0.04 mass% and a fluorine atom content of 42.2 mass%; 0.11 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 10.9 mol with respect to 1 mol of the vinyl groups in the organopolysiloxane described above); 0.15 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.07 parts by mass of a diisopropyl ether solution of 10 mass% methyl butynol; and 96.28 parts by mass of diisopropyl ether.

The release agent composition for a silicone pressure-sensitive adhesive described above was applied to a 50 µm polyethylene terephthalate (PET) film using a Meyer bar #3, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 0.2 µm. The peeling force and residual adhesive strength were measured in accordance with the measurements (1) to (4) described above using this release film, and the results are shown in Table 1.

### [Practical Example 3]

A release agent composition for a silicone pressure-sensitive adhesive was prepared by uniformly mixing 3.37 parts by mass of an organopolysiloxane represented by the average unit formula:

(Me₃SiO_{1/2})₂(Me₂SiO_{2/2})₁₄₆₇(MePf'SiO_{2/2})₁₁₀₀(MeViSiO_{2/2})₁₀

and having a vinyl group content of 0.05 mass% and a fluorine atom content of 48.9 mass%; 0.13 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 10.0 mol with respect to 1 mol of the vinyl groups in the organopolysiloxane described above); 0.18 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.08 parts by mass of a diisopropyl ether solution of 10 mass% methyl butynol; and 96.24 parts by mass of diisopropyl ether.

The release agent composition for a silicone pressure-sensitive adhesive described above was applied to a 50 µm polyethylene terephthalate (PET) film using a Meyer bar #3, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 0.2 µm. The peeling force and residual adhesive strength were measured in accordance with the measurements (1) to (4) described above using this release film, and the results are shown in Table 1.

### [Comparative Example 1]

A release agent composition for a silicone pressure-sensitive adhesive was prepared by uniformly mixing 3.29 parts by mass of an organopolysiloxane represented by the average unit formula:

(Me₃SiO_{1/2})₂(Me₂SiO_{2/2})₄₄₀(MePfSiO_{2/2})₃₃₀(MeViSiO_{2/2})₁₀

and having a vinyl group content of 0.20 mass% and a fluorine atom content of 41.9 mass%; 0.27 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 5.5 mol with respect to 1 mol of the vinyl groups in the organopolysiloxane described above); 0.15 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.07 parts by mass of a diisopropyl ether solution of 10 mass% methyl butynol; and 96.22 parts by mass of diisopropyl ether.

The release agent composition for a silicone pressure-sensitive adhesive described above was applied to a 50 µm polyethylene terephthalate (PET) film using a Meyer bar #3, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 0.2 µm. The peeling force and residual adhesive strength were measured in accordance with the measurements (1) to (4) described above using this release film, and the results are shown in Table 1.

### [Comparative Example 2]

A release agent composition for a silicone pressure-sensitive adhesive was prepared by uniformly mixing 3.38 parts by mass of an organopolysiloxane represented by the average unit formula:

(Me₂ViSiO_{1/2})₂(Me₂SiO_{2/2})₁₇₄₅(MePfSiO_{2/2})₇₅₀(MeViSiO_{2/2})₅

and having a vinyl group content of 0.05 mass% and a fluorine atom content of 35.7 mass%; 0.14 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 10 mol with respect to 1 mol of the vinyl groups in the organopolysiloxane described above); 0.17 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.08 parts by mass of a diisopropyl ether solution of 10 mass% methyl butynol; and 96.23 parts by mass of diisopropyl ether.

The release agent composition for a silicone pressure-sensitive adhesive described above was applied to a 50 µm polyethylene terephthalate (PET) film using a Meyer bar #3, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 0.2 µm. The peeling force and residual adhesive strength were measured in accordance with the measurements (1) to (4) described above using this release film, and the results are shown in Table 1.

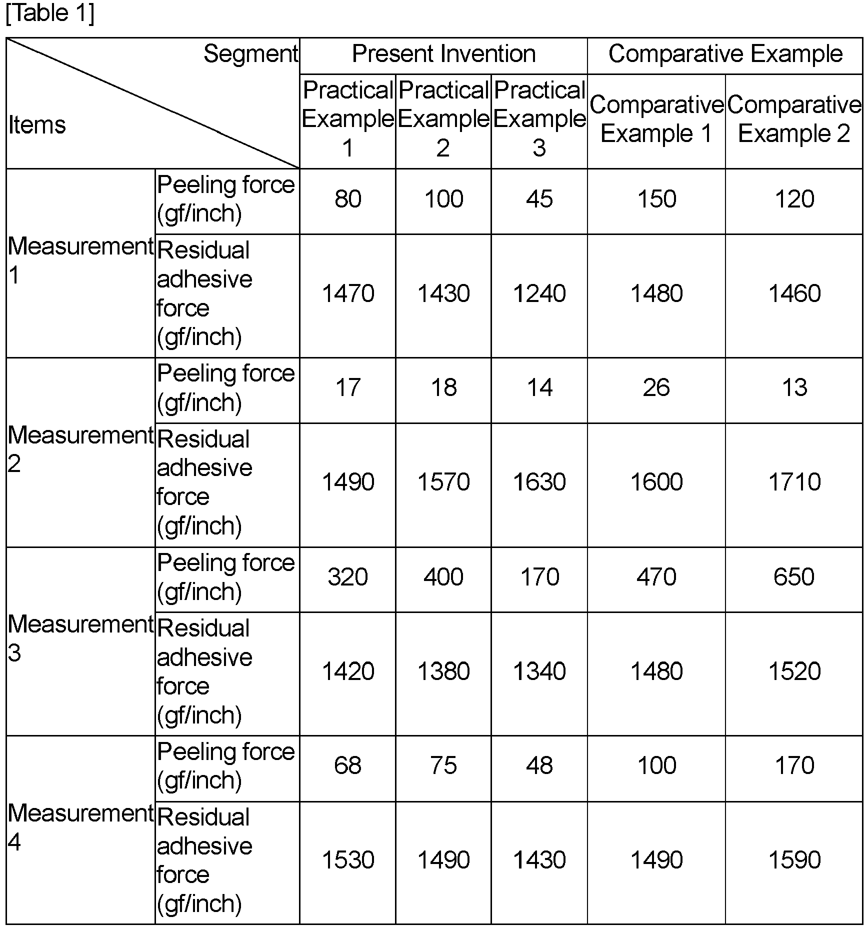

### [Practical Example 4]

A release agent composition for a silicone pressure-sensitive adhesive was prepared by uniformly mixing 10.26 parts by mass of an organopolysiloxane represented by the average unit formula:

(Me₃SiO_{1/2})₂(Me₂SiO_{2/2})₄₆₃(MePfSiO_{2/2})₃₄₂(MeViSiO_{2/2})₃(MeSiO_{3/2})₃

and having a vinyl group content of 0.06 mass% and a fluorine atom content of 41.9 mass%; 0.42 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 10.7 mol with respect to 1 mol of the vinyl groups in the organopolysiloxane described above); 0.48 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.18 parts by mass of a diisopropyl ether solution of 10 mass% methyl butynol; and 88.66 parts by mass of diisopropyl ether.

The release agent composition for a silicone pressure-sensitive adhesive described above was applied to a 50 µm polyethylene terephthalate (PET) film using a Meyer bar #10, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 1.2 µm. The peeling force and residual adhesive strength were measured in accordance with the measurements (1) to (4) described above using this release film, and the results are shown in Table 2.

### [Practical Example 5]

A release agent composition for a silicone pressure-sensitive adhesive was prepared by uniformly mixing 10.21 parts by mass of an organopolysiloxane represented by the average unit formula:

(Me₂ViSiO_{1/2})₂(Me₂SiO_{2/2})₇₆₀(MePfSiO_{2/2})₅₇₉(MeViSiO_{2/2})₃(MeSiO_{3/2})₆

and having a vinyl group content of 0.05 mass% and a fluorine atom content of 42.3 mass%; 0.36 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 10.7 mol with respect to 1 mol of the vinyl groups in the organopolysiloxane described above); 0.51 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.19 parts by mass of a diisopropyl ether solution of 10 mass% methyl butynol; and 88.73 parts by mass of diisopropyl ether.

The release agent composition for a silicone pressure-sensitive adhesive described above was applied to a 50 µm polyethylene terephthalate (PET) film using a Meyer bar #10, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 1.2 µm. The peeling force and residual adhesive strength were measured in accordance with the measurements (1) to (4) described above using this release film, and the results are shown in Table 2.

### [Comparative Example 3]

A release agent composition for a silicone pressure-sensitive adhesive was prepared by uniformly mixing 10.16 parts by mass of an organopolysiloxane represented by the average unit formula:

(Me₂ViSiO_{1/2})₂(Me₂SiO_{2/2})₁₇₄₅(MePfSiO_{2/2})₇₅₀(MeViSiO_{2/2})₅

and having a vinyl group content of 0.05 mass% and a fluorine atom content of 35.7 mass%; 0.43 parts by mass of an organopolysiloxane represented by the average unit formula:

   (Me₃SiO_{1/2})₂(MePfSiO_{2/2})₁₂(MeHSiO_{2/2})₂₇
and having a silicon atom-bonded hydrogen atom content of 0.50 mass% and a fluorine atom content of 37.6 mass% (in an amount such that the silicon atom-bonded hydrogen atom content in this component was 10 mol with respect to 1 mol of the vinyl groups in the organopolysiloxane described above); 0.50 parts by mass of a 1,3-divinyl-1,1,3,3-tetramethyldisiloxane solution of a 1,3-divinyl-1,1,3,3-tetramethyldisiloxane complex of platinum (platinum content=1.0 mass%); 0.24 parts by mass of a diisopropyl ether solution of 10 mass% methyl butynol; and 88.67 parts by mass of diisopropyl ether.

The release agent composition for a silicone pressure-sensitive adhesive described above was applied to a 50 µm polyethylene terephthalate (PET) film using a Meyer bar #10, and after the solvent was removed, the solution was cured by heating for 3 minutes in an oven at 150°C and then aged for 24 hours or longer at 70°C to produce a release film. When measured with a Filmetrics, the thickness of the silicone layer on the release film was 1.3 µm. The peeling force and residual adhesive strength were measured in accordance with the measurements (1) to (4) described above using this release film, and the results are shown in Table 2.

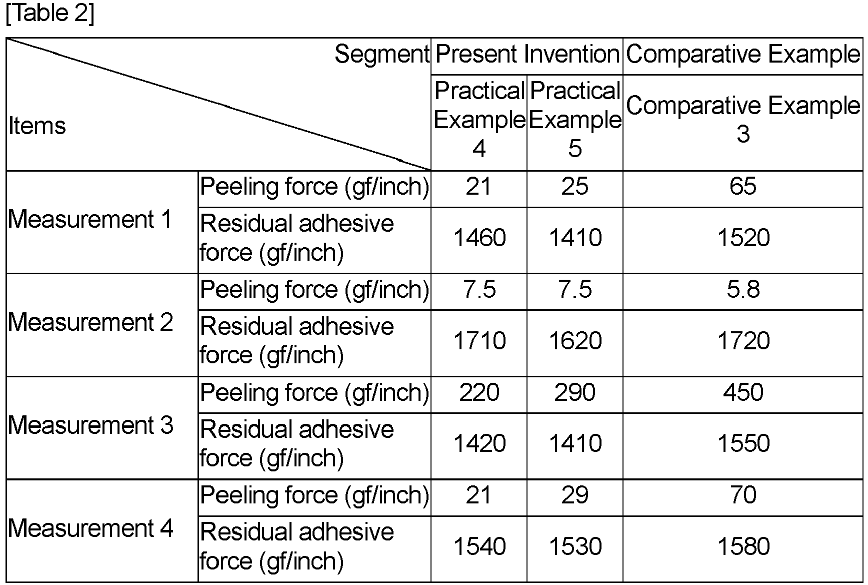

### Industrial Applicability

The release agent composition for a silicone pressure-sensitive adhesive of the present invention can form a release film having a small peeling force with respect to a silicone pressure-sensitive adhesive, so the composition is effective as a release agent composition for producing a release film for a silicone pressure-sensitive adhesive that does not have a support substrate.

## Claims

1. A release agent composition for a silicone pressure-sensitive adhesive comprising:
(A) an organopolysiloxane represented by the average unit formula:
(R¹₃SiO_{1/2})ₐ(R¹₂SiO_{2/2})_{b}(R¹SiO_{3/2})_{c}(SiO_{4/2})_{d}
wherein R¹ are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms; at least two R¹ are the alkenyl groups; a content of the alkenyl groups in terms of vinyl groups is at most 0.1 mass%; a content of fluorine atoms associated with the fluoroalkyl groups is at least 36 mass%; "a" is a positive number; "b" is a positive number; "c" is 0 or a positive number; and "d" is 0 or a positive number;
(B) an organopolysiloxane having at least two silicon atom-bonded hydrogen atoms in a molecule, in an amount such that a molar ratio of the silicon atom-bonded hydrogen atoms in this component to the alkenyl groups in component (A) is from 0.1 to 20; and
(C) an effective amount of a hydrosilylation reaction catalyst.

2. The release agent composition for a silicone pressure-sensitive adhesive according to claim 1, wherein the fluoroalkyl group in component (A) is a 3,3,3-trifluoropropyl group, a 3,3,4,4,4-pentafluorobutyl group, a 3,3,4,4,5,5,5-heptafluoropentyl group, a 3,3,4,4,5,5,6,6,6-nonafluorohexyl group, a 3,3,4,4,5,5,6,6,7,7,7-undecafluoroheptyl group, a 3,3,4,4,5,5,6,6,7,7,8,8,8-tridecafluorooctyl group, or a 3,3,4,4,5,5,6,6,7,7,8,8,9,9,9-pentadecafluorononyl group.

3. The release agent composition for a silicone pressure-sensitive adhesive according to claim 1 or 2, wherein component (B) is an organopolysiloxane having a fluoroalkyl group with from 1 to 12 carbon atoms.

4. The release agent composition for a silicone pressure-sensitive adhesive according to any one of claims 1 to 3, further comprising (D) a hydrosilylation reaction inhibitor, in an amount of from 0.01 to 5 parts by mass with respect to 100 parts by mass of component (A).

5. The release agent composition for a silicone pressure-sensitive adhesive according to any one of claims 1 to 4, further comprising (E) an arbitrary amount of a solvent.

6. A release film obtained by treating a substrate with the release agent composition for a silicone pressure-sensitive adhesive according to any one of claims 1 to 5.

7. The release film according to claim 6, wherein the substrate is a plastic film.

## Patentansprüche

1. Trennmittelzusammensetzung für einen druckempfindlichen Silikonklebstoff, umfassend:
(A) ein Organopolysiloxan, das von der durchschnittlichen Einheitsformel dargestellt wird:
(R¹₃SiO_{1/2})ₐ(R¹₂SiO_{2/2})_{b}(R¹SiO_{3/2})_{c}(SiO_{4/2})_{d}
wobei R¹ gleich oder verschieden sind und Alkylgruppen mit 1 bis 12 Kohlenstoffatomen, Alkenylgruppen mit 2 bis 12 Kohlenstoffatomen, Arylgruppen mit 6 bis 12 Kohlenstoffatomen, Aralkylgruppen mit 7 bis 12 Kohlenstoffatomen oder Fluoralkylgruppen mit 1 bis 12 Kohlenstoffatomen sind; mindestens zwei R¹ die Alkenylgruppen sind; ein Gehalt der Alkenylgruppen in Bezug auf Vinylgruppen höchstens 0,1 Massen-% beträgt; ein Gehalt an Fluoratomen, die mit den Fluoralkylgruppen assoziiert sind, mindestens 36 Massen-% beträgt; "a" eine positive Zahl ist; "b" eine positive Zahl ist; "c" 0 oder eine positive Zahl ist; und "d" 0 oder eine positive Zahl ist;
(B) ein Organopolysiloxan mit mindestens zwei an Siliziumatome gebundenen Wasserstoffatomen in einem Molekül, in einer solchen Menge, dass ein Molverhältnis der an Siliziumatome gebundenen Wasserstoffatome in dieser Komponente zu den Alkenylgruppen in Komponente (A) 0,1 bis 20 beträgt; und
(C) eine wirksame Menge eines Hydrosilylierungsreaktionskatalysators.

2. Trennmittelzusammensetzung für einen druckempfindlichen Silikonklebstoff nach Anspruch 1, wobei die Fluoralkylgruppe in Komponente (A) eine 3,3,3-Trifluorpropylgruppe, eine 3,3,4,4,4-Pentafluorbutylgruppe, eine 3,3,4,4,5,5,5-Heptafluorpentylgruppe, eine 3,3,4,4,5,5,6,6,6-Nonafluorhexylgruppe, eine 3,3,4,4,5,5,6,6,7,7,7-Undecafluorheptylgruppe, eine 3,3,4,4,5,5,6,6,7,7,8,8,8-Tridecafluoroctylgruppe oder eine 3,3,4,4,5,5,6,6,7,7,8,8,9,9,9-Pentadecafluornonylgruppe ist.

3. Trennmittelzusammensetzung für einen druckempfindlichen Silikonklebstoff nach Anspruch 1 oder 2, wobei Komponente (B) ein Organopolysiloxan mit einer Fluoralkylgruppe mit 1 bis 12 Kohlenstoffatomen ist.

4. Trennmittelzusammensetzung für einen druckempfindlichen Silikonklebstoff nach einem der Ansprüche 1 bis 3, ferner umfassend (D) einen Hydrosilylierungsreaktionshemmer in einer Menge von 0,01 bis 5 Masseteilen pro 100 Masseteile von Komponente (A).

5. Trennmittelzusammensetzung für einen druckempfindlichen Silikonklebstoff nach einem der Ansprüche 1 bis 4, ferner umfassend (E) eine beliebige Menge eines Lösungsmittels.

6. Trennfolie, die durch Behandeln eines Substrats mit der Trennmittelzusammensetzung für einen druckempfindlichen Silikonklebstoff nach einem der Ansprüche 1 bis 5 erhalten wird.

7. Trennfolie nach Anspruch 6, wobei das Substrat eine Kunststofffolie ist.

## Revendications

1. Composition d'agent de démoulage destinée à un adhésif de silicone sensible à la pression comprenant :
(A) un organopolysiloxane représenté par la formule unitaire moyenne :
(R¹₃SiO_{1/2})ₐ(R¹₂SiO_{2/2})_{b}(R¹SiO_{3/2})_{c}(SiO_{4/2})_{d}
dans laquelle les R¹ sont identiques ou différents, et sont des groupes alkyle ayant de 1 à 12 atomes de carbone, des groupes alcényle ayant de 2 à 12 atomes de carbone, des groupes aryle ayant de 6 à 12 atomes de carbone, des groupes aralkyle ayant de 7 à 12 atomes de carbone, ou des groupes fluoroalkyle ayant de 1 à 12 atomes de carbone ; au moins deux R¹ sont les groupes alcényle ; une teneur en groupes alcényle en termes de groupes vinyle est d'au plus 0,1 % en masse ; une teneur en atomes de fluor associés aux groupes fluoroalkyle est d'au moins 36 % en masse ; « a » est un nombre positif ; « b » est un nombre positif ; « c » est 0 ou un nombre positif ; et « d » est 0 ou un nombre positif ;
(B) un organopolysiloxane ayant au moins deux atomes d'hydrogène liés à un atome de silicium dans une molécule, en une quantité telle qu'un rapport molaire des atomes d'hydrogène liés à un atome de silicium dans ce composant aux groupes alcényle dans le composant (A) va de 0,1 à 20 ; et
(C) une quantité efficace d'un catalyseur de réaction d'hydrosilylation.

2. Composition d'agent de démoulage destinée à un adhésif de silicone sensible à la pression selon la revendication 1, dans laquelle le groupe fluoroalkyle dans le composant (A) est un groupe 3,3,3-trifluoropropyle, un groupe 3,3,4,4,4-pentafluorobutyle, un groupe 3,3,4,4,5,5,5-heptafluoropentyle, un groupe 3,3,4,4,5,5,6,6,6-nonafluorohexyle, un groupe 3,3,4,4,5,5,6,6,7,7,7-undécafluoroheptyle, un groupe 3,3,4,4,5,5,6,6,7,7,8,8,8-tridécafluorooctylé ou un groupe 3,3,4,4,5,5,6,6,7,7,8,8,9,9,9-pentadécafluorononyle.

3. Composition d'agent de démoulage destinée à un adhésif de silicone sensible à la pression selon la revendication 1 ou 2, dans laquelle le composant (B) est un organopolysiloxane ayant un groupe fluoroalkyle avec 1 à 12 atomes de carbone.

4. Composition d'agent de démoulage destinée à un adhésif de silicone sensible à la pression selon l'une quelconque des revendications 1 à 3, comprenant en outre (D) un inhibiteur de réaction d'hydrosilylation, en une quantité allant de 0,01 à 5 parties en masse par rapport à 100 parties en masse de composant (A).

5. Composition d'agent de démoulage destinée à un adhésif de silicone sensible à la pression selon l'une quelconque des revendications 1 à 4, comprenant en outre (E) une quantité arbitraire d'un solvant.

6. Film de démoulage obtenu en traitant un substrat avec la composition d'agent de démoulage destinée à un adhésif de silicone sensible à la pression selon l'une quelconque des revendications 1 à 5.

7. Film de démoulage selon la revendication 6, dans lequel le substrat est un film plastique.
